# FASCICULE DE BREVET EUROPEEN

(11) **EP 2 631 626 B1**
(45) Date de publication et mention de la délivrance du brevet: **12.08.2015**
(21) Numéro de dépôt: 13155751.4
(22) Date de dépôt: 19.02.2013
(51) Int. Cl.: G01M 17/04, G01M 7/06, B64F 5/00

(54) **Dispositif d'excitation au sol d'un train d'atterrissage d'un aéronef**
Erregungsvorrichtung bei Bodenkontakt eines Fahrwerks eines Luftfahrzeugs
Device for energising an aircraft landing gear on the ground

(30) Priorité: 24.02.2012 FR 1251730
(43) Date de publication de la demande: 28.08.2013
(73) Titulaire: Airbus Opérations SAS, 31060 Toulouse (FR)
(72) Inventeur: Botargues, Nicolas, 31000 Toulouse (FR); Lagarde, Bruno, 31770 Colomiers (FR)
(74) Mandataire: Gevers France

(56) Documents cités:
- EP-A2- 1 852 349
- WO-A1-2007/104995

## Description

La présente invention concerne un dispositif d'excitation au sol d'un train d'atterrissage d'un aéronef et, notamment, du train d'atterrissage avant.

On sait que, du fait du roulement des roues sur la piste, la partie inférieure du train avant d'un aéronef est soumise à des vibrations qui sont induites par le balourd des roues, les irrégularités de la piste ou bien encore par l'entrée en résonance en torsion du train d'atterrissage, qui est faiblement amortie.

De telles vibrations ont une fréquence qui est liée à la vitesse de roulage de l'aéronef. Leur amplitude dépend des caractéristiques dynamiques du train avant et de la transmissibilité desdites vibrations au reste de la structure du train.

Même dans le cas où de telles vibrations ne sont pas suffisamment importantes pour entraîner un accident, elles sont gênantes et dangereuses et peuvent entraîner des interruptions de décollage et/ou des détériorations, notamment du matériel des baies électroniques de la partie avant de l'aéronef.

Ces vibrations, qui apparaissent même dans un aéronef neuf par la résonance entre le train d'atterrissage et la structure de l'aéronef, ne peuvent pas être réellement appréciées tant que ce dernier n'a pas effectué son premier vol et que la conception du train avant et de la structure de l'aéronef n'est pas achevée.

Aussi, afin de prévenir l'apparition de telles vibrations et/ou d'en limiter les effets, il est indispensable de les étudier préalablement à la mise en circulation de chaque aéronef, afin de pouvoir paramétrer les différents dispositifs de ce dernier en conséquence.

Ainsi, de façon connue, pour exciter le train avant d'un aéronef et étudier les vibrations résultantes, on surélève intégralement l'aéronef au-dessus du sol, au moyen de vérins hydrauliques. Lorsque l'aéronef est surélevé, on applique un effort statique sur les roues du train avant à l'aide de cordons élastiques, attachés au crochet de tractage de l'aéronef, afin de limiter le jeu entre les différentes pièces du train avant. On met ensuite en vibration le train avant par l'intermédiaire de pots vibrants disposés au contact des roues de celui-ci. Les vibrations sont enregistrées au moyen de capteurs montés sur la structure de l'aéronef.

Toutefois, outre le fait que la réalisation d'une telle excitation est longue et fastidieuse à mettre en oeuvre, le comportement dynamique du train avant ainsi obtenu reste très approximatif et éloigné de la réalité : le train avant, qui ne repose pas sur le sol, est complètement détendu, de sorte que l'ajustement ultérieur des différents paramètres de l'aéronef est imprécis.

Par ailleurs, on connaît par le document WO-2007/104995, un dispositif d'excitation au sol d'un train d'atterrissage qui comprend un pied de soutien oblong qui sert également d'actionneur pour soumettre le train d'atterrissage à des efforts de test.

La présente invention a pour objet de remédier aux inconvénients précités.

A cette fin, selon l'invention, le dispositif d'excitation au sol d'un train d'atterrissage d'un aéronef (par exemple un train avant), ledit train comprenant un fût disposé verticalement pendant ladite excitation, un essieu disposé orthogonalement par rapport audit fût et au moins une roue montée libre en rotation autour dudit essieu,
est remarquable en ce qu'il comporte :
- un pied de soutien oblong, d'axe vertical, apte à maintenir ladite roue surélevée par rapport au sol et comportant une partie inférieure et une partie supérieure reliées l'une à l'autre par une liaison tournante laissant libre la rotation, autour de l'axe dudit pied de soutien, de la partie supérieure dudit pied par rapport à la partie inférieure, ladite partie supérieure étant apte à s'appliquer à l'extrémité inférieure dudit fût ;
- des moyens de support sur lesquels est monté ledit pied oblong, lesdits moyens de support étant mobiles dans un plan de déplacement horizontal ; et
- des moyens pour mettre en vibration ledit train.

Ainsi, grâce à l'invention, l'excitation du train d'atterrissage obtenue se rapproche d'une excitation réelle engendrée lors des conditions normales d'utilisation d'un aéronef. Le train d'atterrissage supporte désormais le poids de l'aéronef, alors que, dans les excitations connues jusqu'à présent, le train était suspendu (l'aéronef étant soulevé par des vérins) et donc déchargé du poids de l'aéronef. Les roues des trains d'atterrissage principaux reposent sur le sol lors de l'excitation. Une telle configuration, outre le fait qu'elle soit plus représentative de la réalité, permet de tester différentes longueurs de fût et d'identifier les évolutions en stabilité pour une pluralité de masses de l'aéronef.

En outre, grâce au dispositif de l'invention, les mouvements de rotation autour de l'axe vertical du train d'atterrissage lors de l'excitation sont transmis directement à la partie supérieure du pied de soutien, libre en rotation, afin d'être étudiés. Les moyens de support du pied suivent également avec précision les déplacements du train dans le plan horizontal, au cours de ladite excitation.

De plus, la masse effective du train d'atterrissage n'est que très faiblement modifiée par le dispositif d'excitation : la masse de la partie supérieure du pied du dispositif est négligeable par rapport à la masse du train.

Autrement dit, la présente invention permet d'obtenir des résultats fiables à même d'être utilisés pour étudier le comportement dynamique des différents éléments de l'aéronef et pour optimiser la conception de celui-ci (réduction de masse de certains équipements, paramétrage des dispositifs à bord de l'aéronef, etc...).

Ainsi, la présente d'invention permet de tester la structure d'un aéronef :
- de manière sécurisée dans un hangar ;
- sans aide d'un équipage à bord de l'aéronef ;
- sans blocage de créneaux de piste ;
- sans consommation de fuel ;
- rapidement du fait que :
   ▪ les longueurs de l'amortisseur du train, logé dans son fût, peuvent être modifiées très facilement (par exemple en ajustant la pression dans les différentes chambres correspondantes) pour simuler différents cas de masse de l'aéronef, alors qu'une variation réelle de sa masse reste longue à mettre en oeuvre ; et
   ▪ les vitesses de roulage sont pilotées instantanément de par la faible résistance des roues non chargées ;
- de manière méthodique et exhaustive puisque la vitesse de roulage et le balourd des roues, éventuellement imposé, sont connus.

De préférence, lesdits moyens de mise en vibration comportent des moyens pour entraîner ladite roue surélevée en rotation autour de l'axe dudit essieu. Dans ce cas, au moins une roue du train d'atterrissage peut être équipée d'une ou plusieurs masselottes déséquilibrantes pour engendrer un balourd sur ladite roue.

En variante, lesdits moyens de vibration pourraient se présenter sous la forme d'un ou plusieurs pots vibrants en contact avec les roues du train d'atterrissage.

En outre, lesdits moyens d'entraînement peuvent comporter au moins un moteur, des moyens de transmission et au moins un rouleau en contact avec ladite roue. Dans l'invention, ces moyens sont à l'origine de l'excitation par la mise en rotation des roues du train d'atterrissage. Ils simulent le roulage de l'aéronef sur la piste.

Le dispositif peut également comporter des moyens pour maintenir ladite roue en contact permanent avec ledit rouleau.

En particulier, lesdits moyens de maintien peuvent comprendre au moins un vérin, électrique et/ou hydraulique, apte à plaquer ledit rouleau contre la roue.

En outre, un ressort monté en série avec ledit vérin peut avantageusement absorber les oscillations de la roue et ainsi éviter leur transmission audit vérin. Le risque de rupture mécanique de ce dernier est ainsi réduit.

Ainsi, en ajustant précisément le déploiement du vérin, on assure un contact constant entre la roue et le rouleau. Incidemment, on peut également reproduire et matérialiser les forces appliquées par la piste sur la roue pour rendre l'excitation plus fidèle à la réalité.

En variante, les moyens de maintien peuvent comporter au moins une tige de longueur réglable reliée audit rouleau, à une de ses extrémités, et audit essieu, à son autre extrémité. La tige réglable en longueur permet d'adapter le dispositif d'excitation de l'invention à plusieurs types différents d'aéronef, de sorte que l'utilisation dudit dispositif n'est pas limitée à un type d'aéronef particulier.

De préférence, lesdits moyens de support mobiles et lesdits moyens de mise en vibration sont montés sur un plateau apte à être maintenu immobile par rapport au sol.

De plus, lesdits moyens de support mobiles peuvent se présenter sous la forme d'un plateau mobile, apte à se déplacer librement suivant deux directions orthogonales appartenant audit plan de déplacement.

Par ailleurs, ledit pied peut comporter un amortisseur vertical interne, logé à l'intérieur de celui-ci, pour matérialiser la raideur du pneu de la roue et, subsidiairement, pour absorber les mouvements verticaux du train d'atterrissage au cours de ladite excitation. En outre, l'amortisseur rend le fût du train d'atterrissage libre en translation suivant l'axe du pied, ce qui apporte un degré de liberté supplémentaire au fût.

De préférence, ledit pied comporte un moyen de liaison monté à l'extrémité libre de sa partie supérieure et destiné à coopérer avec une zone d'interface ménagée à l'extrémité inférieure dudit fût pour former une liaison auxiliaire, par exemple de type à rotule, laissant libre la rotation dudit fût autour de deux axes orthogonaux entre eux et à l'axe dudit pied.

En particulier, ledit moyen de liaison peut se présenter sous la forme d'un évidement de forme sphérique, destiné à recevoir ladite zone d'interface du fût définie par une protubérance de forme sphérique complémentaire.

Ainsi, grâce aux liaisons tournante et à rotule, à l'amortisseur du pied et à la mobilité des moyens de support dans le plan de déplacement horizontal, le train d'atterrissage est libre de se mouvoir suivant six degrés de liberté (correspondant à trois déplacements en translation et à trois déplacement en rotation).

En outre, ladite liaison tournante laissant libre la rotation de la partie supérieure dudit pied par rapport à sa partie inférieure peut comporter au moins un roulement à billes.
Les figures du dessin annexé feront bien comprendre comment l'invention peut être réalisée. Sur ces figures, des références identiques désignent des éléments semblables.
La figure 1 représente, dans une vue schématique générale, un avion civil au sol dont le train avant est monté sur un dispositif d'excitation selon un exemple de réalisation conforme à la présente invention.
La figure 2 est une vue schématique en perspective du dessus du dispositif d'excitation de la figure 1 conforme à la présente invention.
Les figures 3 et 4 montrent, dans une vue schématique respectivement de côté et de l'arrière, le dispositif d'excitation de la figure 1.
La figure 3A, semblable à la figure 3, représente une variante de réalisation des moyens de maintien des rouleaux du dispositif d'excitation de la figure 1.
La figure 5 est une vue agrandie du pied de soutien et du plateau mobile en X-Y, sur lequel il est monté, appartenant au dispositif d'excitation de la figure 1.
La figure 6 est une perspective agrandie et partiellement arrachée de l'articulation à rotule du pied du dispositif d'excitation de la figure 1.
La figure 7 est une vue schématique du dessus du dispositif de la figure 1, sur laquelle sont représentés les emplacements de vérins utilisés pour soulever la pointe avant de deux types d'avion distincts.

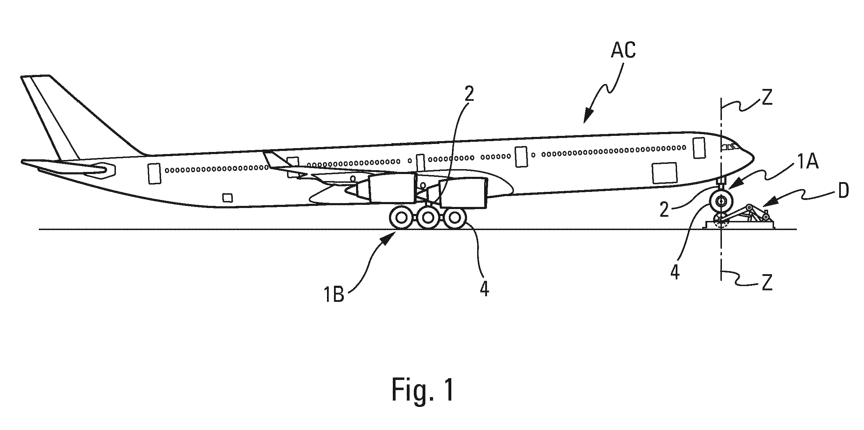

Sur la figure 1, on a représenté, de façon schématique, un avion de ligne AC comportant un train d'atterrissage avant 1A directeur escamotable, en position déployée, excité par un dispositif d'excitation D conforme à la présente invention. L'avion AC comporte en outre deux trains d'atterrissage principaux 1 B reposant à même le sol 6.

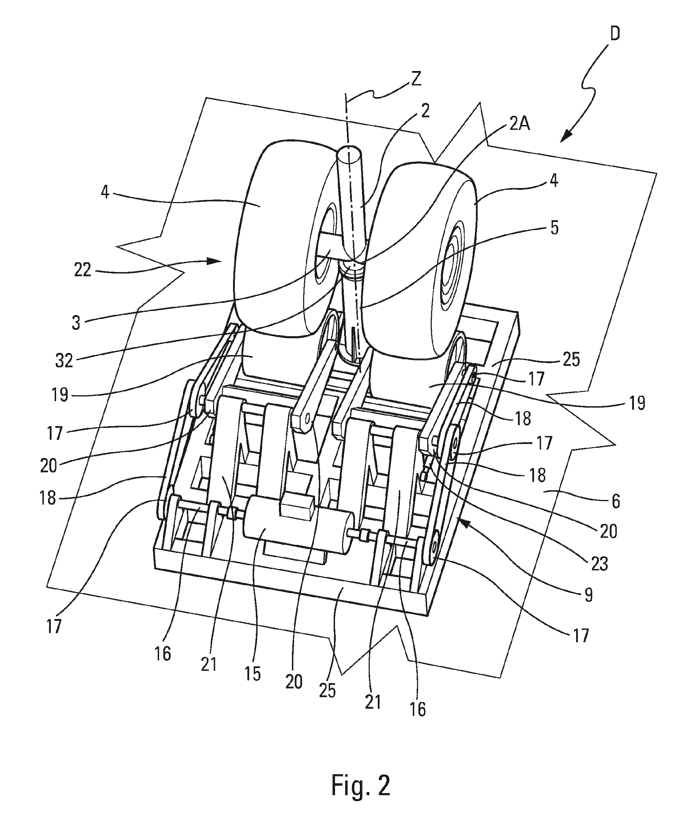

Comme le montrent les figures 1 et 2, le train avant 1A comporte un fût allongé 2 monté rotatif, par rapport au reste de l'avion et dudit train 1A, autour d'un axe vertical Z-Z. La rotation du fût 2 autour de l'axe vertical Z-Z est obtenue par des moyens d'actionnement hydraulique (non représentés).

Le train avant 1A comporte également un essieu double 3 orthogonal au fût 2, fixé à l'extrémité inférieure 2A de ce dernier, ainsi qu'une paire de roues jumelées 4 montées libres en rotation autour dudit essieu 3.

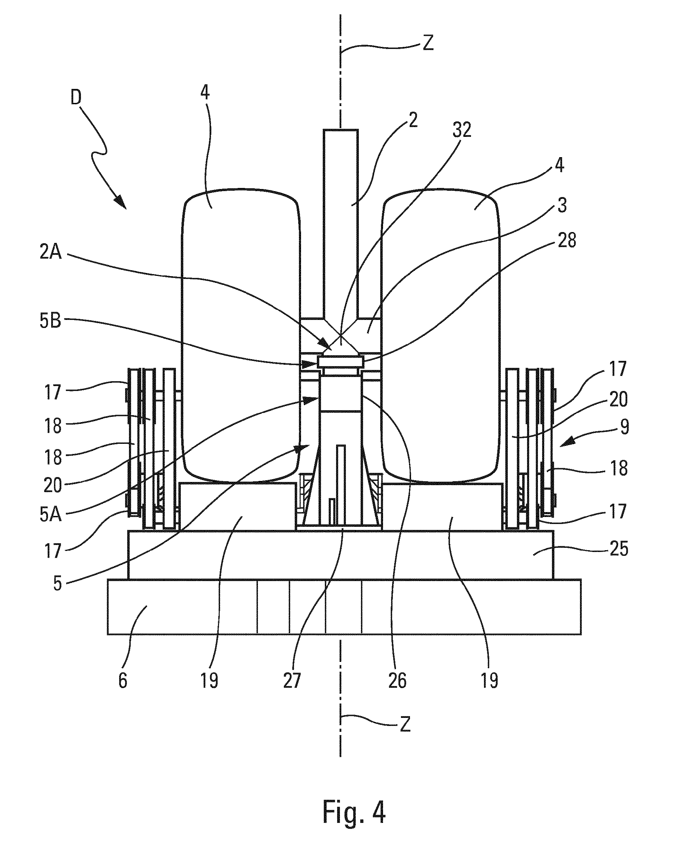

Selon l'invention, tel que représenté sur les figures 2 à 5, le dispositif D d'excitation au sol du train avant 1A de l'avion AC comporte :
- un pied de soutien 5 oblong, d'axe vertical Z-Z, permettant de maintenir les deux roues 4 surélevées par rapport au sol 6. Le pied 5 comporte une partie inférieure 5A et une partie supérieure 5B reliées l'une à l'autre par une liaison tournante 7 laissant libre la rotation, autour de l'axe Z-Z du pied 5, de la partie supérieure 5B par rapport à la partie inférieure 5A. La partie supérieure 5B est apte à s'appliquer à l'extrémité inférieure 2A du fût 2 ;
- des moyens de support 8 sur lesquels est monté ledit pied oblong 5. Ces moyens 8 sont mobiles dans un plan de déplacement horizontal défini par deux axes orthogonaux X-X et Y-Y, l'axe vertical Z-Z étant orthogonal au plan de déplacement ; et
- des moyens 9 pour entraîner les roues 4 surélevées en rotation autour de l'axe de l'essieu 3.

Ainsi, pour mettre en place le dispositif d'excitation D sur le sol 6, on soulève la pointe avant de l'avion AC, à l'aide d'un vérin hydraulique, afin de positionner correctement le dispositif D par rapport au fût 2 et aux roues 4 du train avant 1A déployé. Dès lors qu'un tel positionnement a été correctement réalisé, on abaisse progressivement l'avion AC de telle sorte que le fût 2 repose sur la partie supérieure 5B du pied oblong 5.

Dans ce cas, le train avant 1A supporte au moins une partie de la charge de l'avion AC, d'une façon qui se rapproche des conditions réelles de charge du train avant 1A lorsque les roues de celui-ci reposent sur le sol.

Pour exciter et mettre en vibrations le train avant 1A, le dispositif D commande la mise en rotation des roues 4 à une vitesse de rotation prédéterminée (par exemple comprise entre 0 Hz et 30 Hz). Les roues 4 peuvent également être équipées de masselottes déséquilibrantes.

Ainsi, l'excitation du train avant 1A, obtenue par la rotation des roues 4, s'apparente à celle produite lors des conditions normales d'utilisation du train avant 1A. Le comportement dynamique de celui-ci, déterminé grâce à l'excitation provoquée par le dispositif D de l'invention, est fiable et fidèle à la réalité.

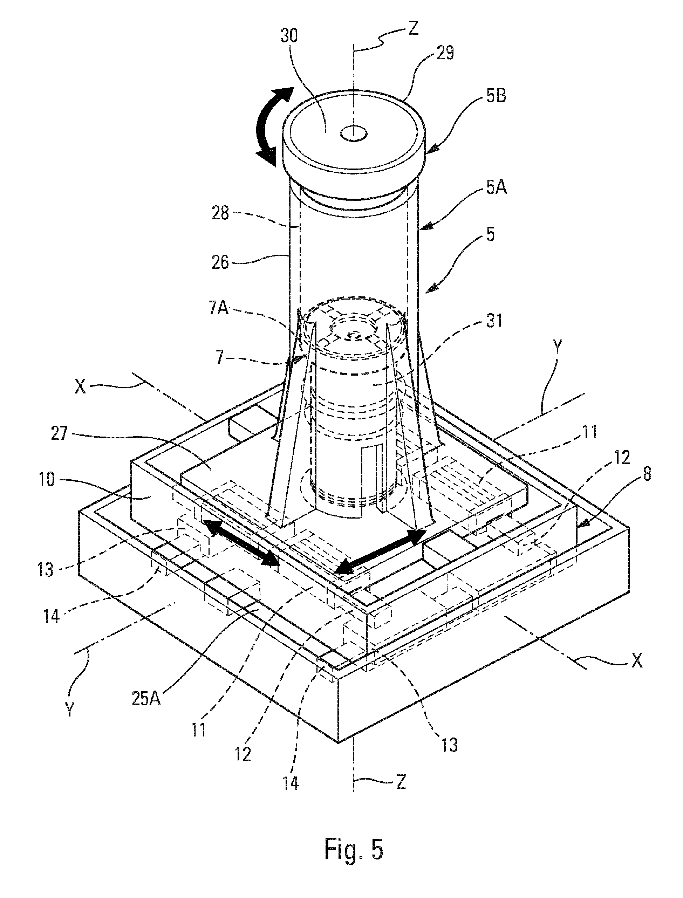

Dans l'exemple décrit, comme le montre la figure 5, les moyens de support 8 se présentent sous la forme d'un plateau mobile 10, apte à se déplacer librement suivant les deux axes orthogonaux X-X et Y-Y.

Le plateau 10 est monté sur des premiers patins 11 glissant sur des premiers rails de guidage 12, parallèles entre eux et à l'axe X-X. Les premiers rails de guidage 12 sont quant à eux portés par des seconds patins glissants 13 montés sur des seconds rails 14, parallèles entre eux et à l'axe Y-Y. Autrement dit, les premiers et seconds rails de guidage 12 et 14 sont orthogonaux entre eux.

Ainsi, le plateau mobile 10 peut se déplacer librement selon les deux directions X-X et Y-Y.

Par ailleurs, comme le montrent les figures, les moyens 9 d'entraînement de roues 4 comportent un moteur électrique 15, un arbre de transmission 16, des poulies 17 reliées entre elles par des courroies d'entraînement 18, ainsi que deux rouleaux 19 en contact avec les roues 4 correspondantes.

Le moteur 15 met en rotation l'arbre de transmission 16, à une vitesse de rotation déterminée. L'arbre 16 transmet le mouvement de rotation aux poulies 17, fixées à chacune de ses extrémités longitudinales, qui entraînent à leur tour des poulies intermédiaires 17, au moyen de courroies d'entraînement 18. Ces poulies intermédiaires 17 transmettent, par d'autres courroies 18, le mouvement de rotation à des poulies terminales 17 solidaires de l'axe longitudinal des rouleaux 19, qui entrent alors en rotation.

Les rouleaux 19 sont supportés par des paliers 20 qui sont montés mobiles, à leur extrémité libre, à une armature 21. Ainsi, la position angulaire de chacun des paliers 20, par rapport à l'armature 21 correspondante, est variable et ajustable précisément, afin de maintenir en permanence les roues 4 en contact avec les rouleaux 19 correspondants et de permettre éventuellement l'adaptation successive du dispositif D à différents types d'avion.

La vitesse de rotation des rouleaux 19, qui est transmise aux roues 4, est, par exemple, pilotée précisément par un moyen de pilotage (non représenté sur les figures) commandé automatiquement ou manuellement par un opérateur en fonction de la réponse de la structure de l'avion AC.

Le dispositif D comprend en outre des moyens 22 pour maintenir en permanence les roues 4 en contact avec les rouleaux 19 correspondants.

Dans l'exemple, les moyens de maintien 22 comprennent deux vérins 23 pour plaquer les rouleaux 19 contre les roues 4 correspondantes (par exemple avec un effort constant d'environ 50kg), de telle façon que les axes de rotation des rouleaux 19 et des roues 4 associées appartiennent à un même plan vertical. Autrement dit, dans la configuration de maintien, les rouleaux 19 sont agencés sous les roues 4 correspondantes, au droit de celles-ci, ce qui permet d'éviter une modification de la rigidité avant-arrière du train d'atterrissage 1A. Les vérins 23 permettent également de dégager les rouleaux 19 des roues 4 correspondantes pour permettre une libre décélération de celles-ci.

En outre, un ressort (non représenté) peut avantageusement être monté en série avec chaque vérin 23, de manière à absorber les oscillations de la roue 4 associée et éviter leur transmission audit vérin 23.

Ainsi, en ajustant précisément le déploiement des vérins 23, on peut comprimer plus ou moins les roues 4 sur les rouleaux 19 correspondants, afin d'assurer un contact permanent, quelle que soit la pression des pneus des roues 4.

Accessoirement, on peut également reproduire et matérialiser les forces appliquées par la piste sur chacune des roues 4 pour rendre l'excitation plus fidèle à la réalité.

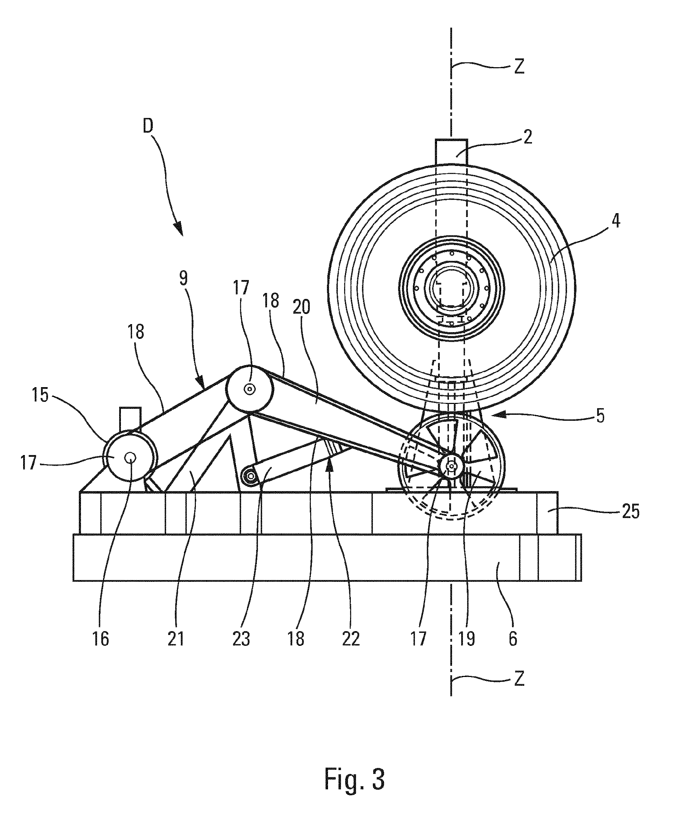

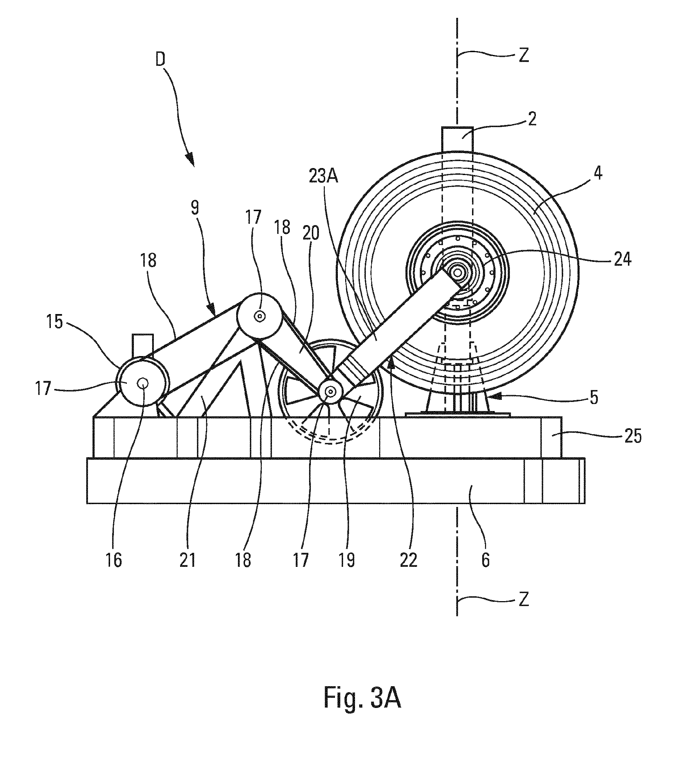

Dans une variante avantageuse illustrée sur la figure 3A, les moyens de maintien 22 comprennent deux tiges 23A de longueur réglable. Chaque tige 23A est reliée, à une de ses extrémités, à l'axe d'un rouleau 19 correspondant et, à son autre extrémité, à l'axe dudit essieu 3 par l'intermédiaire d'un embout adapté 24.

De façon semblable aux vérins 23, en ajustant précisément la longueur des tiges 23A, on peut comprimer plus ou moins les roues 4 sur les rouleaux 19 correspondants.

On comprendra que les informations portant sur les vitesses des rouleaux 19 et des roues 4 et sur les efforts appliqués sur ces dernières peuvent être mesurées précisément et transmises à des moyens d'acquisition (non représentés) associés au dispositif D, qui enregistrent la réponse de l'avion AC.

Par ailleurs, les moyens de support mobiles 8 et les moyens d'entraînement sont montés sur un plateau fixe 25.

Comme le montre la figure 5, les seconds rails de guidage 14 du plateau mobile 10 reposent sur une base 25A d'assiette ajustable, qui est supportée par le plateau 25 apte à être maintenu immobile par rapport au sol 6.

On notera que :
- des billes de manutention escamotables (non représentées) peuvent être montées sur le plateau 25 pour permettre son déplacement ; et
- des pieds de réglage (non représentés) peuvent intégrés au plateau 25 pour permettre son immobilisation au sol et un ajustement de son inclinaison par rapport à un plan horizontal.

En outre, la partie inférieure 5A du pied 5 se présente sous la forme d'un tube 26, en position verticale lors de l'excitation, et d'une base plate 27 montée solidaire à l'extrémité inférieure du tube 26. La base plate 27 du pied 5 est supportée par le plateau mobile 10 et calée sur celui-ci, de sorte que le plateau mobile 10 suit avec précision les déplacements du train avant 1A dans le plan horizontal par l'intermédiaire du pied 5, au cours d'une excitation.

La partie supérieure 5B est formée d'un embout 28 de forme tubulaire et de section transversale telle qu'il peut être introduit, avec ajustement, à l'intérieur du tube 26.

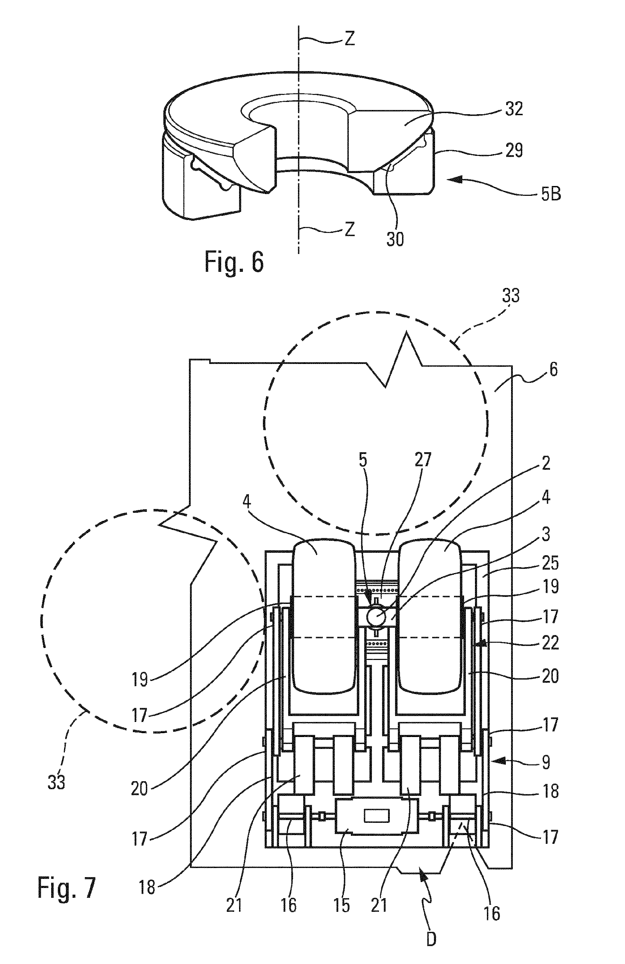

Tel qu'illustré sur les figures 5 et 6, l'embout 28 comporte, à son extrémité supérieure, une bague 29 comportant un évidement de forme sphérique 30 dans lequel peut se loger une protubérance 32 de forme sphérique complémentaire (encore appelée dôme) agencée à l'extrémité inférieure 2A du fût 2 pour former une articulation à rotule R entre le pied 5 et le fût 2.

On notera que la protubérance 32 - habituellement utilisée pour le changement des roues - est normalement identique pour tous les types d'avion. Cela rend compatible le dispositif D de l'invention avec tous les types d'avion. En cas d'incompatibilité, on peut néanmoins prévoir de rendre l'embout 28 amovible ou bien d'intercaler une pièce d'interface appropriée entre la bague 29 et la protubérance 32.

Ainsi, grâce à l'articulation à rotule R, la rotation du fût 2 autour de deux axes orthogonaux entre eux et à l'axe Z-Z du pied 5 est libre, ce qui confère deux degrés de liberté supplémentaires au train d'atterrissage 1A suspendu sur le pied 5.

En outre, le pied 5 comporte un amortisseur vertical interne 31 logé à l'intérieur du tube 26. Cet amortisseur 31, par exemple formé d'un empilement vertical de rondelles Belleville ou encore de coussins d'air, matérialise la raideur des pneus des roues 4, afin d'obtenir un comportement dynamique du train avant 1A plus réaliste.

La liaison tournante 7, laissant libre la rotation de la partie supérieure 5B du pied 5 par rapport à sa partie inférieure 5A, peut comporter au moins un roulement à billes 7A. Elle est intercalée entre l'amortisseur interne 31 et l'extrémité inférieure de l'embout 28.

Ainsi, grâce à la liaison tournante 7, à l'articulation à rotule R, à l'amortisseur 31 et au plateau mobile 10, le train d'atterrissage 1A suspendu présente six degrés de liberté.

Par ailleurs, comme le montre la figure 7, l'encombrement réduit du dispositif d'excitation D de l'invention lui permet de ne pas gêner le positionnement du vérin hydraulique de soulèvement de l'avion.

Sur cette figure, l'emplacement d'un vérin hydraulique pour un type d'avion particulier est symbolisé par un cercle 33 en pointillés.

Par ailleurs, le dispositif D comporte une pluralité de capteurs (non représentés) pour détecter les déplacements du plateau mobile 10, toute rotation de la partie supérieure 5B du pied 5 autour de l'axe vertical Z-Z, toute translation verticale du train 1A, ainsi que toute rotation de l'articulation à rotule R.

En outre, l'avion est également équipé de capteurs, tels que des accéléromètres et des jauges de contrainte, pour enregistrer le comportement vibratoire des différents éléments de celui-ci, et notamment du train avant 1A.

L'ensemble de ces capteurs est par exemple relié aux moyens d'acquisition précités.

Ainsi, en faisant varier certains paramètres du dispositif D et/ou de l'avion AC, il est possible d'obtenir différents comportements dynamiques du train avant 1A soumis à une excitation déterminée.

En particulier, il est possible de faire varier la vitesse de rotation des roues, d'équiper une des deux roues (voire les deux) de masselottes déséquilibrantes, de modifier la charge de l'avion AC, d'ajuster la longueur de l'amortisseur du train avant (ce qui en modifie la raideur et simule une variation de masse de l'avion AC), etc...

Grâce au dispositif D de l'invention, quelle que soit l'excitation réalisée, celle-ci est précisément calibrée.

On notera que, dans une variante, les moyens d'entraînement 9 des roues 4 peuvent être montés amovibles, ce qui permet de les désolidariser du reste du dispositif D (et notamment du pied de soutien 5). De cette manière, il est possible d'installer les moyens d'entraînement 9 une fois le train d'atterrissage suspendu par le pied 5. En outre, un moyen de levage pourrait être monté directement sur le dispositif D afin de soulever la pointe avant de l'avion AC de façon autonome, après un positionnement sous le train d'atterrissage.

Par ailleurs, l'invention concerne également un système pour la suspension intégrale de l'avion AC au-dessus du sol 6.

Un tel système (non représenté sur les figures) comprend autant de dispositifs D, conformes à l'invention, que l'avion AC comporte de trains d'atterrissage 1 A et 1 B.

Les dispositifs D peuvent, ou non, être équipés des moyens 9 d'entraînement des roues 4 des trains. Par exemple, seul le dispositif D sur lequel repose le train avant 1A pourrait comporter des moyens d'entraînement des roues.

Une fois l'avion AC suspendu au moyen des dispositifs D, chaque train d'atterrissage 1A, 1B présente six degrés de liberté, ce qui permet d'étudier le comportement dynamique de l'avion dans des conditions de liberté quasi-totale.

## Revendications

1. Dispositif d'excitation au sol d'un train d'atterrissage (1A) d'un aéronef (AC), ledit train comprenant un fût (2) disposé verticalement pendant ladite excitation, un essieu (3) disposé orthogonalement par rapport audit fût (2) et au moins une roue (4) montée libre en rotation autour dudit essieu, ledit dispositif (D) comportant :
- un pied de soutien oblong (5), d'axe vertical (Z-Z), apte à maintenir ladite roue (4) surélevée par rapport au sol (6) et comportant une partie inférieure (5A) et une partie supérieure (5B) reliées l'une à l'autre par une liaison tournante (7) laissant libre la rotation, autour de l'axe (Z-Z) dudit pied de soutien, de la partie supérieure (5B) dudit pied par rapport à la partie inférieure (5A), ladite partie supérieure étant apte à s'appliquer à l'extrémité inférieure (2A) dudit fût (2) ;
- des moyens de support (8) sur lesquels est monté ledit pied oblong ;
- et des moyens (9) pour mettre en vibration ledit train (1A),
**caractérisé en ce que** lesdits moyens de support (8) sont mobiles dans un plan de déplacement horizontal, et **en ce que** lesdits moyens de mise en vibration comportent des moyens (9) pour entraîner ladite roue (4) surélevée en rotation autour de l'axe dudit essieu (3).

2. Dispositif selon la revendication 1,
**caractérisé en ce que** lesdits moyens d'entraînement (9) comportent au moins un moteur (15), des moyens de transmission (16, 17, 18) et au moins un rouleau (19) en contact avec ladite roue (4).

3. Dispositif selon la revendication 2,
**caractérisé en ce qu'**il comporte également des moyens (22) pour maintenir ladite roue (4) en contact permanent avec ledit rouleau (19).

4. Dispositif selon la revendication 3,
**caractérisé en ce que** les moyens de maintien (22) comportent au moins un vérin (23) apte à plaquer ledit rouleau (19) contre la roue (4).

5. Dispositif selon la revendication 3,
**caractérisé en ce que** lesdits moyens de maintien (22) comprennent au moins une tige (23) de longueur réglable reliée audit rouleau (19), à une de ses extrémités, et audit essieu (3), à son autre extrémité.

6. Dispositif selon l'une des revendications 1 à 5,
**caractérisé en ce que** lesdits moyens de support mobiles (8) et lesdits moyens (9) de mise en vibration sont montés sur un plateau (25) apte à être maintenu immobile par rapport au sol (6).

7. Dispositif selon l'une des revendications 1 à 6,
**caractérisé en ce que** lesdits moyens de support mobiles (8) se présentent sous la forme d'un plateau mobile (10), apte à se déplacer librement suivant deux directions orthogonales (X-X, Y-Y) appartenant audit plan de déplacement.

8. Dispositif selon l'une des revendications 1 à 7,
**caractérisé en ce que** ledit pied (5) comporte un amortisseur vertical interne (31), logé à l'intérieur de celui-ci.

9. Dispositif selon l'une des revendications 1 à 8,
**caractérisé en ce que** ledit pied (5) comporte un moyen de liaison monté à l'extrémité libre de sa partie supérieure (5B) et destiné à coopérer avec une zone d'interface (32) ménagée à l'extrémité inférieure (2A) dudit fût (2) pour former une liaison auxiliaire (R), par exemple de type à rotule, laissant libre la rotation dudit fût (2) autour de deux axes orthogonaux entre eux et à l'axe (Z-Z) dudit pied (5).

10. Dispositif selon la revendication 9,
**caractérisé en ce que** ledit moyen de liaison se présente sous la forme d'un évidement de forme sphérique, destiné à recevoir ladite zone d'interface (32) du fût (2) définie par une protubérance de forme sphérique complémentaire.

## Patentansprüche

1. Vorrichtung zur Anregung am Boden eines Fahrwerks (1 A) eines Flugzeugs (AC), wobei das Fahrwerk einen Schaft (2), der während der Anregung vertikal angeordnet ist, eine Welle (3) die mit Bezug auf den Schaft (2) orthogonal angeordnet ist, und zumindest ein Rad (4) aufweist, das um die Welle frei drehend angebracht ist, wobei die Vorrichtung (D) umfasst:
- einen länglichen Stützfuß (5) einer vertikalen Achse (Z-Z), der eingerichtet ist das Rad (4) mit Bezug auf den Boden (6) angehoben zu halten, und einen unteren Teil (5A) und einen oberen Teil (5B) aufweist, die miteinander durch eine Drehverbindung (7) verbunden sind, welche die freie Drehung des oberen Teils (5B) des Stützfußes mit Bezug auf den Unteren Teil (5A) um die Achse (Z- Z) des Stützfußes ermöglicht, wobei der obere Teil eingerichtet ist, auf dem unteren Ende (2A) des Schafts (2) aufzuliegen;
- Stützmittel (8), auf welchen der längliche Fuß angebracht ist;
- und Mittel (9) zum Versetzen des Fahrwerks (1A) in Vibration,
**dadurch gekennzeichnet, dass** die Stützmittel (8) in einer horizontalen Bewegungsebene beweglich sind, und dass die Mittel (9) zum Versetzen in Vibration Mittel (9) aufweisen, um das angehobene Rad (4) um die Achse der Welle (3) in Rotation zu versetzen.

2. Vorrichtung nach Anspruch 1, **dadurch gekennzeichnet, dass** die Mittel (9) zur Anregung zumindest einen Motor (15), Transmissionsmittel (16, 17, 18) und zumindest eine Rolle (19) in Kontakt mit dem Rad (4) aufweisen.

3. Vorrichtung nach Anspruch 2, **dadurch gekennzeichnet, dass** sie ebenfalls Mittel (22) aufweist, um das Rad (4) in andauernden Kontakt mit der Rolle (19) zu halten.

4. Vorrichtung nach Anspruch 3, **dadurch gekennzeichnet, dass** die Mittel (22) zum Halten zumindest einen Zylinder (23) aufweisen, der eingerichtet ist, die Rolle (19) gegen das Rad (4) zu pressen.

5. Vorrichtung nach Anspruch 3, **dadurch gekennzeichnet, dass** die Mittel (22) zu Halten zumindest einen Stiel (23) mit einer einstellbaren Länge aufweisen, der mit der Rolle (19) an einem seiner Enden und mit der Welle (3) an seinem anderen Ende verbunden ist.

6. Vorrichtung nach einem der Ansprüche 1 bis 5, **dadurch gekennzeichnet, dass** die beweglichen Stützmittel (8) und die Mittel (9) zum Versetzen in Vibration auf einer Platte (25) angebracht sind, die eingerichtet ist, mit Bezug auf den Boden (6) unbeweglich gehalten zu werden.

7. Vorrichtung nach einem der Ansprüche 1 bis 6, **dadurch gekennzeichnet, dass** die mobilen Stützmittel (8) in Form einer mobilen Platte (10) ausgebildet sind, die eingerichtet ist, sich frei entlang von zwei orthogonalen Richtungen (X-X, Y-Y) zu bewegen, die zu der Bewegungsebene gehören.

8. Vorrichtung nach einem der Ansprüche 1 bis 7, **dadurch gekennzeichnet, dass** der Fuß (5) einen internen, vertikalen Dämpfer (31) aufweist, der in seinem Inneren aufgenommen ist.

9. Vorrichtung nach einem der Ansprüche 1 bis 8, **dadurch gekennzeichnet, dass** der Fuß (5) ein Verbindungsmittel aufweist, das am freien Ende des oberen Teils (5B) angebracht ist und vorgesehen ist, mit einem Verbindungsbereich (32) zusammenzuwirken, der am unteren Ende (2A) des Schafts (2) untergebracht ist, um eine Hilfsverbindung (R), zum Beispiel vom Typ eines Kugelgelenks, zu bilden, welches die freie Drehung des Schafts (2) um die zwei orthogonalen Achsen zwischen ihnen und der Achse (Z-Z) des Fußes (5) ermöglicht.

10. Vorrichtung nach Anspruch 9, **dadurch gekennzeichnet, dass** das Verbindungsmittel in Form einer sphärischen Aussparung ausgebildet ist, die vorgesehen ist, um den Verbindungsbereich (32) des Schafts (2) aufzunehmen, der als ein Vorsprung in sphärischer, komplementärer Form ausgebildet ist.

## Claims

1. A device for the excitation on the ground of a landing gear (1A) of an aircraft (AC), said gear comprising a strut (2) disposed vertically during said excitation, an axle (3) disposed orthogonally with respect to said strut (2) and at least one wheel (4) mounted freely rotatable about said axle, said device (D) comprising:
- an oblong bracing foot (5), of vertical axis (Z-Z), able to hold said wheel (4) raised with respect to the ground (6) and comprising a lower part (5A) and an upper part (5B) connected together by a revolving linkage (7) permitting free rotation, about the axis (Z-Z) of said bracing foot, of the upper part (5B) of said foot with respect to the lower part (5A), said upper part being able to be applied to the lower end (2A) of said strut (2);
- support means (8) on which said oblong foot is mounted;
- and means (9) for setting said gear (1A) into vibration,
**characterized in that** said support means (8) are movable in a horizontal displacement plane, and **in that** said means for setting into vibration comprise means (9) for driving said raised wheel (4) in rotation about the axis of said axle (3).

2. The device as claimed in claim 1,
**characterized in that** said drive means (9) comprise at least one motor (15), transmission means (16, 17, 18) and at least one roller (19) in contact with said wheel (4).

3. The device as claimed in claim 2,
**characterized in that** also comprises means (22) for holding said wheel (4) permanently in contact with said roller (19).

4. The device as claimed in claim 3,
**characterized in that** the holding means (22) comprise at least one ram (23) able to thrust said roller (19) against the wheel (4).

5. The device as claimed in claim 3,
**characterized in that** said holding means (22) comprise at least one rod (23) of adjustable length connected to said roller (19), at one of its ends, and to said axle (3), at its other end.

6. The device as claimed in any one of claims 1 to 5,
**characterized in that** said movable support means (8) and said means (9) for setting into vibration are mounted on a platen (25) able to be held stationary with respect to the ground (6).

7. The device as claimed in any one of claims 1 to 6,
**characterized in that** said movable support means (8) take the form of a movable platen (10), able to move freely along two orthogonal directions (X-X, Y-Y) belonging to said displacement plane.

8. The device as claimed in any one of claims 1 to 7,
**characterized in that** said foot (5) comprises an internal vertical shock absorber (31), housed inside the latter.

9. The device as claimed in any one of claims 1 to 8,
**characterized in that** said foot (5) comprises a linkage means mounted at the free end of its upper part (5B) and intended to cooperate with an interface zone (32) made at the lower end (2A) of said strut (2) so as to form an auxiliary linkage (R), for example of ball joint type, permitting free rotation of said strut (2) about two axes orthogonal to one another and to the axis (Z-Z) of said foot (5).

10. The device as claimed in claim 9,
**characterized in that** said linkage means takes the form of a spherical shaped recess, intended to receive said interface zone (32) of the strut (2) and defined by a complementary spherical shaped protuberance.
